# EUROPEAN PATENT APPLICATION

(11) **EP 4 269 888 A1**
(43) Date of publication of application: **01.11.2023**
(21) Application number: 22704549.9
(22) Date of filing: 20.01.2022
(51) Int. Cl.: F24F 5/00, F24F 13/30

(54) **TEMPERATURE CONTROL UNIT FOR PROVIDING TEMPERATURE-CONTROLLED AIR IN THE INTERIOR OF AIRCRAFTS OR THE LIKE**

(30) Priority: 25.01.2021 ES 202130054
(71) Applicant: Adelte Airport Technologies, S.L., 08029 Barcelona (ES)
(72) Inventor: PUIG OLIVERAS, Oriol, 08029 Barcelona (ES); UMBERT MARTÍNEZ, Miquel, 08029 Barcelona (ES)
(74) Representative: Isern Patentes y Marcas S.L.
(86) International application number: PCT/ES2022/070025
(87) International publication number: WO 2022/157408

(57) **Abstract**

The present invention provides a temperature control unit provided to supply temperature-controlled air in the interior of aircrafts or the like, comprising a frame having at least one air inlet and one temperature-controlled air outlet, wherein there are arranged in the frame an air impeller, a water circuit provided with a tank, a refrigerant circuit provided with at least one compressor, one heat exchanger, and one expansion valve, the temperature control unit further comprises an adiabatic heat exchanger connected to the water circuit which, in cooling mode, reduces the temperature of the hot air coming from the air inlet, and a water-air heat exchanger arranged downstream of the adiabatic heat exchanger, connected to the water circuit, which, in cooling mode, reduces the temperature of the hot air coming from the adiabatic heat exchanger.

## Description

### TECHNICAL FIELD OF THE INVENTION

The present invention relates to devices which supply temperature-controlled air to a stationed aircraft to ensure user comfort. Particularly, the invention relates to mobile or fixed and autonomous temperature control units that are usually mounted in each boarding bridge or close to each boarding bridge on platforms, wherein these temperature control units usually consist of several compressors, heat exchangers, impellers, controls, software, and all the necessary components within an autonomous package.

### STATE OF THE ART

All modern passenger planes are equipped with an Auxiliary Power Unit (APU). The purpose of the APU is to supply the aircraft with the energy required during its operation. The APU of passenger planes is generally installed in the tail and isolated from the rest of the aircraft with a firewall.

As passengers' demand on airports continues to rise, emissions are increasing and airports are facing the challenge of reducing the associated environmental impacts. In order to cope with this need, global initiatives and regulatory programmes for climate protection which have required the aviation industry to implement new clean technologies and to change its operating practices have been developed for the purpose of reducing the emission of polluting gases such as CO₂, SOx, etc.

An effective option for reducing emissions associated with aircraft APUs surfaced in the form of the so-called aircraft Ground Support Equipment (GSE) which is used when said aircrafts are in handling operations or during the turnaround time, said equipment allowing the planes to be electrically powered in an external manner with GPU (Ground Power Unit) equipment and conditioned air to be supplied to the aircraft to maintain temperatures which are comfortable for the passengers and workers using preconditioned air equipment (PCA - Preconditioned Air Unit).

GSE has led to the reduction in the emissions of polluting gases in airports and in the high expenditures incurred by airlines as a result of having the APUs switched on, and furthermore, a reduction in the noise the APUs generated for personnel working in the parking and boarding areas.

Therefore, in general, it can be said that PCA equipment is responsible for maintaining a comfortable temperature in aircrafts during the turnaround time in any weather situation, allowing the non-usage of APUs.

Today, there are different types of PCA equipment and those that stand out among them are mobile PCAs, which are independent units mounted in lorries or trailers and generally powered by diesel engines, and point-of-use PCA equipment (POU PCA - Point-Of-Use Preconditioned Air Unit) which is an autonomous, electrical power air-conditioning equipment mounted in each boarding bridge or close to each boarding bridge on platforms.

POU PCAs consist of several compressors, heat exchangers, impellers, controls, software, and all the necessary components within an autonomous package which can work both in cold mode and in heat pump mode. POU PCAs are independent of the other units, so if one unit is inoperative, it only affects the operation of a single boarding bridge.

In general, POU PCA equipment has several compressors regardless of the capacity of the equipment, wherein the internal heat exchangers are located in the drawing/drive area of an impeller and sized for the design conditions, achieving a high evaporation and condensation efficiency. The external battery dissipates heat in a cold cycle operation and takes up heat when working as a heat pump.

When the POU PCA operates in cold mode, a large amount of water is often generated in the heat exchangers as a result of condensation, and this water is collected and discharged to the drain without utilising the energy accumulated in the condensed liquid, causing an energy loss in the system.

Moreover, another problem characteristic of direct expansion cooling POU PCA equipment today is that this equipment is incapable of driving air continuously and without oscillations at a low temperature, particularly at temperatures equal to or below 0°C, without the occurrence of a frost generation phenomenon in the evaporators located at the outlet, as a result of the low temperature to be driven. Therefore, the efficiency and performance of the equipment decreases at very low temperatures (such as -8°C, for example) at which the POU PCA must operate.

In view of the foregoing, the need to provide a POU PCA temperature control unit or equipment that can work efficiently at low temperatures has been detected, said unit or equipment utilising the energy transmitted to the condensed liquid, combining adiabatic heat recovery with a high-performance water-air exchanger with high energy efficiency and low environmental impact, delivering temperature-controlled air continuously and without oscillations at temperatures below zero degree Celsius, without requiring a cycle change to be performed to eliminate frost from the evaporator.

### DESCRIPTION

To overcome the indicated drawbacks, the present invention provides a temperature control unit provided to supply temperature-controlled air in the interior of aircrafts or the like, of the type comprising a frame provided with at least one air inlet and at least one temperature-controlled air outlet, at least one air impeller arranged in the frame configured for moving hot or cold air between the air inlet and the temperature-controlled air outlet, at least one water cooling circuit (for short, water circuit), through which condensed and cooled water circulates, arranged in the frame and provided with at least one tank, at least one refrigerant cooling circuit (for short, refrigerant circuit) arranged in the frame through which a pressurised refrigerant circulates, said refrigerant circuit being provided with at least one compressor, at least one heat exchanger, and at least one expansion valve.

It is important to highlight that all the mentioned technical elements are arranged in the frame, unless otherwise indicated.

In particular, the temperature control unit proposed in the invention comprises an adiabatic heat exchanger connected to the water circuit, and a water-air heat exchanger is arranged thereafter or downstream.

Here, it is important to highlight that the expression "downstream" means following the direction of the airflow between the air inlet and the temperature-controlled air outlet, whereas the expression "upstream" means the direction opposite the direction of the airflow.

The adiabatic heat exchanger is configured for a stream of hot air coming from the air inlet to go through same in cooling mode of the temperature control unit, reducing the temperature thereof by transmitting at least a part of its heat to the water circulating through the inside of said adiabatic heat exchanger. Similarly, the water-air heat exchanger arranged downstream of the adiabatic heat exchanger is configured for reducing, in cooling mode, the temperature of the hot air coming from the adiabatic heat exchanger. The cooling of the hot air by the adiabatic heat exchanger and the water-air heat exchanger occurs in what could be called a first step of cooling the air by means of water.

Meanwhile, in a preferred embodiment, in a last step of cooling the air, at least two outlet heat exchangers are provided arranged before the temperature-controlled air outlet and connected to the refrigerant circuit, said outlet exchangers being configured for working individually or simultaneously.

In this embodiment, the invention comprises air directing means configured for selectively directing air to the outlet heat exchangers.

The temperature control unit further comprises an electronic control unit which, in addition to controlling the overall operation of said temperature control unit, is configured for controlling the direction and the airflow from the air impeller and for detecting the start of frost formation in the outlet heat exchangers, such that, in cooling mode of the temperature control unit, when frost formation is detected in one of the final outlet heat exchangers, the control unit activates the air directing means to direct the airflow to the other outlet heat exchanger.

Moreover, the disclosed temperature control unit comprises an auxiliary heat exchanger connected simultaneously to the refrigerant circuit and to the water circuit, arranged such that water from the water circuit which is directed to the inlet of the adiabatic heat exchanger and/or to the inlet of the water-air heat exchanger first passes through said auxiliary heat exchanger. In preferred embodiments, the auxiliary heat exchanger is a coaxial heat exchanger.

It is important to point out that the adiabatic heat exchanger, which is preferably in the form of an evaporative exchanger fed with condensed and cooled water circulating through the water circuit coming from downstream heat exchangers, utilises the technical advantages of an adiabatic system, lowering the temperature of the hot air right after the entry thereof with a very high efficiency, such that the outgoing air is completely saturated with moisture, wherein said moisture can be used to obtain condensed water which feeds at least a part of or the entire temperature control unit, facilitating heat exchange with the subsequent water-air exchanger.

Moreover, in preferred embodiments, the final outlet heat exchangers each comprise a valve that can be controlled by the control unit such that, when frost formation is detected in one of said final outlet heat exchangers, the control unit activates the air directing means to direct the airflow to the other outlet heat exchanger, and at the same time activates a discharge gas to the outlet heat exchanger with frost formed, without having to reverse the cycle, driving the temperature-controlled air in cold mode.

In preferred embodiments, the air impeller is arranged downstream of the final outlet heat exchangers, said air impeller preferably being a centrifugal fan that can be controlled by the control unit.

In addition to the foregoing, real-time data and the history log of the different parts of the temperature control unit can be provided to the electronic control unit, allowing the signals from these elements, as well as from other sources of information, such as outside weather conditions, moisture, etc., to be combined, processed, and analysed, allowing the operation thereof to be optimised by implementing new management and optimisation systems.

### BRIEF DESCRIPTION OF THE FIGURES

The foregoing and other advantages and features will be more fully understood from the following detailed description of exemplary embodiments with reference to the accompanying drawings, which should be considered by way of illustration and not limitation, wherein:

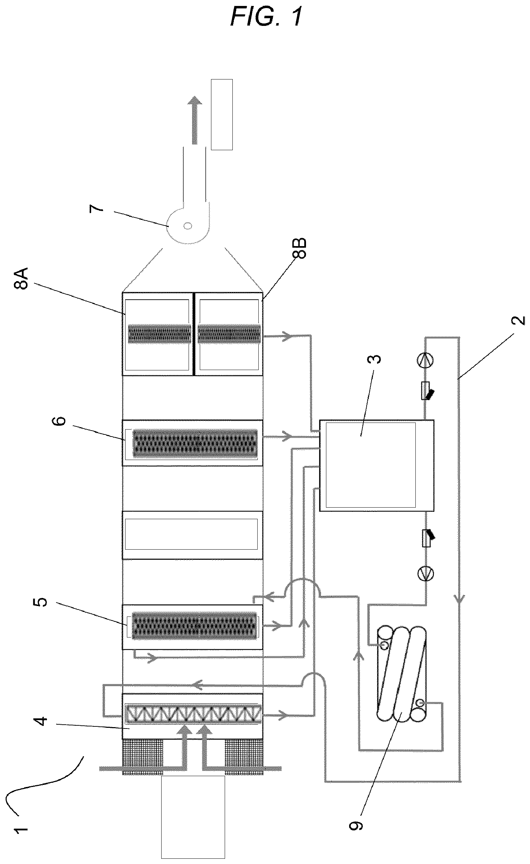

- Figure 1 is a view of the temperature control unit of the invention in cooling mode, wherein the arrows show in detail the direction of airflow between the inlet and the outlet.

### DETAILED DESCRIPTION OF AN EXEMPLARY EMBODIMENT

In the following detailed description, numerous specific details are set forth in the form of examples to provide a thorough understanding of the relevant teachings. However, it will be apparent to those skilled in the art that the present teachings can be implemented without such details.

As can be seen in Figure 1, the present invention provides a temperature control unit 1 for injecting preconditioned air into an aircraft, wherein this temperature control unit 1 is provided for being arranged in a boarding bridge or on a platform, and can work both in cold mode and in heat pump mode.

The temperature control unit 1 has a water circuit 2 through which water which condenses in the different heat exchangers that are part of the temperature control unit 1 moves, as well as different collectors, trays, or the like in which water condensed in said heat exchangers is deposited and used by the water circuit 2. The water circuit 2 also comprises a tank 3 provided for storing at least a part of the water used in said water circuit 2.

As seen in Figure 1, the temperature control unit 1 comprises an adiabatic heat exchanger 4 connected to the water circuit 2 which, in the preferred embodiment, is in the form of an evaporative exchanger fed with condensed water from the water circuit 2 and likewise discharges into said water circuit 2.

A water-air heat exchanger 5 connected to the water circuit 2 is arranged downstream of the adiabatic heat exchanger 4 and a refrigerant heat exchanger 6 is arranged thereafter downstream of the water-air heat exchanger 5, the refrigerant heat exchanger 6 being connected to a refrigerant circuit; however, unlike the water-air heat exchanger 5, this refrigerant heat exchanger 6 is cooled by the evaporation of a liquid refrigerant that moves through the refrigerant circuit.

In the preferred embodiment, the water-air heat exchanger 5 is of the type consisting of a battery of tubes with fins, wherein water from the water circuit 2 circulates through the internal tubes, whereas air coming from the adiabatic heat exchanger 4 circulates through the fins and the outside of the tubes.

The refrigerant heat exchanger 6 is also of the type consisting of a battery of tubes with fins, wherein refrigerant circulates through the tubes, whereas air coming from the second heat exchanger 5 circulates through the fins and the outside of the tubes.

In the preferred embodiment, the temperature control unit 1 comprises, downstream of the refrigerant heat exchanger 6, at least two final outlet heat exchangers 8A, 8B, connected to the refrigerant circuit, wherein these outlet exchangers 8A, 8B are of the type consisting of a battery of tubes with fins, wherein refrigerant circulates through the tubes, whereas air coming from the refrigerant heat exchanger 6 goes through the fins and the outside of the tubes.

As seen in Figure 1, the driven air circulating between the air inlet and the air outlet finally passing through the two final outlet heat exchangers 8A, 8B is drawn towards the temperature-controlled air outlet by an air impeller 7 which, in the preferred embodiment, is a centrifugal drive fan 7 arranged downstream of the outlet heat exchangers 8A, 8B.

An electronic control unit (not shown) is arranged in the temperature control unit 1 for the purpose of controlling the entire operation of said temperature control unit. In particular, this electronic control unit controls the main operating modes of the temperature control unit 1: cooling mode and heat pump mode.

In cooling mode, hot air goes through the adiabatic heat exchanger 4, transmitting at least a part of its heat to the water circulating through the inside of said adiabatic heat exchanger 4, reducing its temperature, but being saturated with moisture.

The water-saturated air then passes through the water-air heat exchanger 5 through which water originating from the condensation occurring in the different heat exchangers of the temperature control unit circulates, said water is cooled and will continue to lower the temperature of the air and furthermore allow the moisture thereof to be reduced. Next, it must pass through the refrigerant heat exchanger 6 to continue lowering the temperature of the air and furthermore it will also allow removing the moisture added by the adiabatic heat exchanger 4.

In parallel to the airflow, the water circuit 2 must ensure that there is enough water to optimally operate the described system in any condition, even in those conditions with a low moisture environment; for this reason, there are arranged a tank 3 or trays which collect water from the condensates, said water being cooled by the refrigerant circuit itself.

In cooling mode, air coming from the refrigerant heat exchanger 6 is selectively or simultaneously directed to the final outlet heat exchangers 8A, 8B as a result of being drawn by the air impeller 7 based on the commands of the control unit. This means that, for example, if the air impeller 7 is drawing air and directing it to the outlet heat exchanger 8A, when the electronic control unit detects the start of frost formation in said outlet heat exchanger 8A, the control unit changes the airflow of the air impeller 7 to the other outlet heat exchanger 8B.

As the control unit changes the airflow of the air impeller 7 to the other outlet heat exchanger 8B, it activates a valve arranged in each of the final outlet heat exchangers 8A, 8B in order to discharge a hot gas to the outlet heat exchanger 8A with frost formed and condense the water and introduce said water into the water circuit through the corresponding collector tray. This process will be repetitive, i.e., the electronic control unit will selectively and alternatively direct the air drawn by the air impeller 7 to the final outlet heat exchangers 8A, 8B while temperature control unit 1 is in operation and frost gradually forms in said heat exchangers 8A, 8B.

The temperature control unit 1 further comprises an auxiliary heat exchanger 9 connected simultaneously to the refrigerant circuit and to the water circuit 2, such that water from the water circuit 2 is directed to the adiabatic heat exchanger 4 and/or to the water-air heat exchanger 5 passing through said auxiliary heat exchanger 5. The purpose of this auxiliary heat exchanger 9 is to establish a heat transmission connection between the water circuit 2 and the refrigerant circuit, such that the condensate from all the exchangers of the temperature control unit 1 are utilised, where said condensate is introduced, further cooled, in the step of cooling the air by means of water, utilising the energy accumulated in the water.

Preferably, the auxiliary heat exchanger 9 is a coaxial heat exchanger, wherein the water circuit 2 is connected to the internal pipe, whereas the refrigerant circulates through the external part of the coaxial heat exchanger.

In view of the above, temperature is successfully reduced with the energy of the condensed water produced by the temperature control unit 1 itself. Furthermore, as a result of the selective or simultaneous control in the direction of the airflow drawn by the air impeller 7, the drive temperature will be below 0°C continuously and without oscillations.

## Claims

1. A temperature control unit for providing temperature-controlled air in the interior of aircrafts or the like, of the type comprising a frame provided with at least one air inlet and one temperature-controlled air outlet, an air impeller arranged in the frame configured for moving hot or cold air between the air inlet and the temperature-controlled air outlet, a water circuit arranged in the frame through which condensed and cooled water circulates, said water circuit being provided with a tank, a refrigerant circuit arranged in the frame through which a pressurised refrigerant circulates, said refrigerant circuit being provided with at least one compressor, one heat exchanger, and one expansion valve, **characterised in that** it comprises:
- an adiabatic heat exchanger arranged in the frame, connected to the water circuit, provided for reducing, in cooling mode, the temperature of the hot air coming from the air inlet; and
- a water-air heat exchanger arranged in the frame downstream of the adiabatic heat exchanger, connected to the water circuit, provided for reducing, in cooling mode, the temperature of the hot air coming from the adiabatic heat exchanger.

2. The temperature control unit according to claim 1, comprising:
- at least two outlet heat exchangers arranged in the frame before the air outlet, connected to the refrigerant circuit, configured for working individually or simultaneously;
- air directing means configured for directing the air to the outlet heat exchangers; and
- a control unit configured at least for controlling the air impeller, for controlling the compressor, for controlling the air directing means, and for detecting the start of frost formation in the outlet heat exchangers such that, when frost formation is detected in one of said outlet heat exchangers, the control unit activates the air directing means to direct the airflow to the other heat exchanger.

3. The temperature control unit according to claim 2, comprising an auxiliary heat exchanger connected to the refrigerant circuit and to the water circuit, such that water from the water circuit is directed to the adiabatic heat exchanger and/or to the water-air heat exchanger passing through said auxiliary heat exchanger.

4. The temperature control unit according to claim 3, wherein the auxiliary heat exchanger comprises a coaxial heat exchanger.

5. The temperature control unit according to any of claims 2 to 4, wherein the outlet heat exchangers each comprise a valve that can be controlled by the control unit such that, when frost formation is detected in one of said outlet heat exchangers, the control unit activates the air directing means to direct the airflow to the other outlet heat exchanger, and at the same time activates a discharge gas to the outlet heat exchanger with frost formed.

6. The temperature control unit according to any of the preceding claims, wherein the adiabatic heat exchanger comprises an evaporative pad comprising an inlet provided to be fed with water from the water circuit and an outlet likewise connected to the water circuit.

7. The temperature control unit according to any of the preceding claims, wherein the air impeller is arranged downstream of the outlet heat exchangers.

8. The temperature control unit according to any of claims 2 to 7, wherein the air directing means comprise a selector linked to the air impeller, said selector being configured for selectively directing air to the outlet heat exchangers.
